# EUROPÄISCHE PATENTSCHRIFT

(11) **EP 0 439 819 B1**
(45) Veröffentlichungstag und Bekanntmachung des Hinweises auf die Patenterteilung: **16.03.1994**
(21) Anmeldenummer: 90125327.8
(22) Anmeldetag: 22.12.1990
(51) Int. Cl.: F25C 1/16, F25B 17/08

(54) **Eiserzeuger nach dem Sorptionsprinzip**
Device for making ice by sorption
Dispositif pour la fabrication de la glace par sorption

(30) Priorität: 02.02.1990 DE 4003107
(43) Veröffentlichungstag der Anmeldung: 07.08.1991
(73) Patentinhaber: ZEO-TECH Zeolith Technologie GmbH, D-85716 Unterschleissheim (DE)
(72) Erfinder: Maier-Laxhuber, Peter, Dr., W-8000 München 60 (DE); Engelhardt, Reiner, W-8000 München 45 (DE)

(56) Entgegenhaltungen:
- EP-A- 0 167 989
- EP-A- 0 205 167
- FR-A- 2 393 246
- US-A- 1 729 083
- US-A- 3 642 059
- US-A- 4 759 191

## Beschreibung

Die Erfindung betrifft einen Eiserzeuger nach dem Sorptionsprinzip sowie ein Verfahren zur Erzeugung von Gefrorenem in einem abtrennbaren Vereisungsgefäß.

Bekannt sind Verfahren und Vorrichtungen zur Erzeugung von Eis nach dem Verdampfungsprinzip. Hierbei wird durch Absaugen von Wasserdampf eine wäßrige Flüssigkeit zur Verdampfung gebracht. Die verdampfende Flüssigkeit kühlt sich dadurch ab, bis sie bei Erreichen des Erstarrungspunktes in die feste Phase übergeht. Der Tripelpunkt von reinem Wasser liegt bei 0° und 6,1 mbar. Wäßrige Lösungen erstarren bei tieferen Temperaturen und tieferem Wasserdampfdruck. Um wäßrige Lösungen mittels Vakuumverdampfung zu erstarren, müssen erhebliche Wasserdampfvolumina abgesaugt werden. Sollen diese Wasserdampfströme auf Atmosphärendruck verdichtet werden, so ist ein beträchtlicher Aufwand an mechanischen Verdichtern notwendig. Sowohl der apparative als auch der energetische Aufwand liegt erheblich über dem alternativer Vereisungsmethoden, z.B. dem konventioneller Kältemaschinen.

Weiterhin sind Methoden bekannt, bei welchen der abzusaugende Wasserdampf in einem Sorptionsmittel adsorbiert wird. Derartige Anlagen werden beispielsweise zur Gefriertrocknung von Lebensmitteln eingesetzt.

Aus dem Dokument FR-A-2 393 246 ist ein Sorptionsapparat mit einem festen Sorptionsbehälter bekannt, der einen festen Sorptionsstoff enthält und an eine Vakuumpumpe angeschlossen ist, über die sowohl der Sorptionsbehälter als auch ein Verdampfer evakuierbar sind. Dieser Sorptionsapparat dient zur Kühlung einer Kühlbox oder zur Klimatisierung von Räumen, nicht aber zur Erzeugung von Eis.

In der EP-A-0 167 989 findet sich ein Vereisungsgefäß, welches auf niedrigem Druck evakuiert ist und bei welchem durch Anstechen eines Wasserbehälters eine zur Erstarrung vorgesehene Flüssigkeit in ein Gefäß eingeleitet wird, wo sie durch Vakuum-Verdampfung erstarrt. Der abströmende Wasserdampf wird in einem festen Sorptionsmittel adsorbiert. Diese Vereisungsvorrichtung ist ein hermetisch geschlossenes System, welches bei der Fertigung evakuiert werden muß und bis nach der Eiserzeugung unter Vakuum bleiben muß.

Obwohl letztere Methoden eine sehr schnelle und schonende Eiserzeugung ermöglichen, konnten sie bislang zur Eiserzeugung im Haushalt und Kleingewerbe nicht eingesetzt werden.

Aufgabe der Erfindung ist ein Verfahren zur preiswerten kommerziellen Eiserzeugung und eine einfache Vorrichtung zur schnellen und verlustlosen Eisbereitung.

Gelöst wird diese Aufgabe durch eine Vorrichtung mit den Merkmalen des Anspruches 1 bzw. ein Verfahren nach Anspruch 10. Die Unteransprüche geben weitere, vorteilhafte Ausgestaltungen der Erfindung wieder.

Mit dem erfindungsgemäßen Eiserzeuger können in Vereisungsgefäßen beliebiger Form und beinahe beliebig großem Öffnungsquerschnitt wäßrige Flüssigkeiten schnell und einfach erstarrt werden. Bedingt durch den von der Vakuumpumpe erzeugten Unterdruck werden die Vereisungsgefäße vakuumdicht auf eine plane Dichtfläche am Sorptionsbehälter gepreßt. Da die Dichtfläche plan und mit einer glatten Dichtung versehen ist, ist es nicht notwendig, das Vereisungsgefäße zentrisch in bezug auf die Saugöffnung aufzusetzen. Auch die Verwendung von Vereisungsgefäßen mit kleinerem Öffnungsquerschnitt, wie beispielsweise Schnapsgläsern, ist sichergestellt, da selbst bei diesen kleinen Öffnungsquerschnitten, bedingt durch den niedrigen Arbeitsdruck, genügend Anpreßkraft zur Verfügung steht. Andererseits kann die plane Dichtfläche so groß gewählt werden, daß auch große Vereisungsgefäße, wie beispielsweise Wein- oder Sektkübel untergesetzt werden können. Die Dichtfläche ist dabei so ausgerichtet, daß die Vereisungsgefäße im wesentlichen senkrecht stehen, so daß die einströmende Flüssigkeit und die gefrorenen Eispartikeln auf den Boden des Vereisungsgefäßes fallen.

Da beim Abströmen von Luft- und Wasserdampf aus dem Vereisungsgefäß über die Saugöffnung Strömungsgeschwindigkeiten von weit über 100 m/s auftreten, werden Wassertropfen bzw. bereits gefrorene Eispartikel in den Sorptionsbehälter mitgerissen. Um dies zu verhindern wird ein Tropfen- oder Partikelabscheider so innerhalb des Vereisungsgefäßes angeordnet, daß die abgeschiedenen Wassertropfen bzw. Partikel zurück auf den Gefäßboden fallen und nicht in den Sorptionsbehälter gelangen können. Die Abscheideeinrichtung ist dabei vorteilhafterweise so um die Saugöffnung angeordnet, daß die abzuscheidenden Partikel mehrmals umgelenkt und durch die Zentrifugalkräfte am Einströmen in die Saugöffnung gehindert werden.

Vorteilhafterweise mündet die Zuleitung für die zu gefrierende Flüssigkeit unterhalb der Abscheidevorrichtung und weit oberhalb des Bodens des Vereisungsgefäßes. Sehr gute Ergebnisse werden erzielt, wenn der Durchmesser der Zuleitung etwa 1 mm beträgt und die Mündung der Zuleitung trichterförmig auf 10 bis 20 mm erweitert wird. Auf diese Weise kann ein Verstopfen der Zuleitung beim Gefrieren wirksam verhindert werden.

Von Vorteil ist es auch, die Zuleitung durch die Saugöffnung hindurch zu führen und den Tropfenabscheider mit der Mündungsöffnung der Zuleitung zu kombinieren. Auf diese Weise gelingt es, eine kompakte Einheit von Tropfenabscheider und Zuleitung zu geschaffen, die auch bei kleineren Vereisungsgefäßen nicht zu weit in die Gefäße hineinragt. Vorteilhafterweise wird die Zuleitung und die Abscheidevorrichtung so angebracht, daß sie zum Reinigen vom Eiserzeuger abgetrennt werden können.

Besonders vorteilhaft ist es auch, mehrere Zuleitungen für unterschiedliche, wäßrige Lösungen vorzusehen.

Auf diese Weise ist es möglich, mit ein und demselben Eiserzeuger ohne Umbauten sowohl Wassereis, Fruchteis (aus Fruchtsäften) als auch Speiseeis (aus Milch und Eispulver) zu erzeugen. Jede Zuleitung kann eine separate Mündungsöffnung besitzen oder aber in einer gemeinsamen Mündungsöffnung enden.

Die Zuleitungen sind mit einem Absperrhahn versehen. Erst nachdem der Druck im Vereisungsgefäß unter den Arbeitsdruck von 6,1 mbar absinkt, darf die Flüssigkeit in das Vereisungsgefäß einlaufen. Wird die Flüssigkeit vor Erreichen des Vereisungsdruckes von 6,1 mbar (bei wäßrigen Lösungen ist der Vereisungsdruck niedriger) in das Vereisungsgefäß eingeleitet, so kann diese nicht erstarren. Sie sammelt sich am Boden des Vereisungsgefässes und gefriert bei Unterschreiten des Vereisungsdruckes unter einer heftigen Verdampfungsreaktion an der Oberfläche zu Eis, während unter der geschlossenen Eisschicht eine flüssige Phase zurückbleibt. Um dies zu verhindern ist es von Vorteil, eine automatische Regelung vorzusehen, die einen Zufluß der Flüssigkeiten vor Erreichen des Vereisungsdruckes verhindert. Vorteilhaft sind optische Druckanzeigen, die dem Benutzer das Erreichen des Arbeitsdruckes anzeigen oder auch rein automatische Einspritzvorrichtungen, wie sie etwa aus der Kältetechnik bekannt sind.

Bedingt durch den niedrigen Druck werden die Flüssigkeiten selbst durch die Zuleitungen hindurch angesaugt. Mechanische Fördervorrichtungen in den Zuleitungen erübrigen sich dadurch.

Besonders vorteilhaft ist es, die Zuleitungen in Form flexibler Schläuche auszuführen, die dann leicht in geeignete Vorratsbehälter mit den zu gefrierenden Flüssigkeiten gesteckt werden können. Vorratsbehälter können beispielsweise Mineralwasserflaschen, Milchflaschen oder auch Fruchtsafttüten sein. Es genügt, wenn im Deckel oder auf der Oberseite der Verpackung eine entsprechend große Öffnung gestochen wird, durch die der dünne Zuleitungsschlauch eingeführt wird.

Die Vakuumpumpe hat die Aufgabe, den Systemdruck unter 6,1 mbar abzusenken. Da je nach Ausgestaltung des Eiserzeugers zumindest das Vereisungsgefäß vielfach aber auch der Sorptionsbehälter von Atmosphärendruck auf den Vereisungsdruck abgesaugt werden muß, ist eine Vakuumpumpe mit hohem Saugvolumen von Vorteil, um die Abpumpzeit möglichst kurz zu halten. Andererseits genügt aber bereits ein Endvakuum in der Größenordnung von 1 mbar. Theoretisch würde es ausreichen, auf einen Enddruck von 6,1 mbar zu evakuieren, um aber entsprechende Strömungswiderstände in der Saugöffnung sowie im Sorptionsmittel zu überwinden, sollte der erreichbare Enddruck etwas tiefer liegen. Enddrücke unter 1 mbar bringen keine weiteren Vorteile. Falls Drehschieber-Vakuumpumpen zum Einsatz kommen, ist darauf zu achten, daß eine Ölrückströmsicherung vorhanden und der Ausstoß von Ölnebeln aus der Ausblasöffnung geringt ist.

Der Sorptionsbehälter sollte vorteilhafterweise so gestaltet sein, daß der vom Vereisungsgefäß angesaugte Wasserdampf den eingefüllten Sorptionsstoff gleichmäßig erreichen kann. Der Anteil an nicht mit Sorptionsstoff ausgefüllten Hohlräumen und Zuleitungen soll möglichst klein sein, um rasch auf den notwendigen Arbeitsdruck evakuieren zu können.

Der Sorptionsstoff hat die Aufgabe, den Wasserdampf aus dem Vereisungsgefäß zu adsorbieren; d.h. den Wasserdampf innerhalb der Sorptionsstoffstruktur zu kondensieren und zu binden. Dabei wird Sorptionswärme frei, welche den Sorptionsstoff erhitzt. Die Aufnahmefähigkeit von Sorptionsstoffen nimmt bei höheren Temperaturen stark ab. Um eine hohe Vereisungsleistung über einen längeren Zeitraum aufrecht zu erhalten, ist es vorteilhaft, den Sorptionsstoff zu kühlen. Hierzu ist es erforderlich, den Sorptionsbehälter mit geeigneten Kühlvorrichtungen zu versehen. Vorteilhaft sind hierzu Wärmetauscher für Luft oder ein Kühlwasserkreislauf.

Aber auch bei Raumtemperatur haben Sorptionsstoffe nur eine begrenzte Aufnahmefähigkeit für Wassermoleküle. Eine Erschöpfung macht sich dadurch bemerkbar, daß trotz laufender Vakuumpumpe, die Eiserzeugungsrate zurückgeht oder überhaupt kein Eis erzeugt werden kann. In diesem Fall muß der Sorptionsstoff durch frischen ersetzt oder aber durch Wärmezufuhr regeneriert werden. Im ersten Fall hat der Sorptionsbehälter eine Verschlußvorrichtung, über welche die gesättigte Sorptionsstoffüllung entnommen und durch eine regenerierte ersetzt werden kann. Besonders vorteilhaft hat sich hier ein vakuumdichter Spunddeckel mit Spannring erwiesen.

Zum Regenerieren des Sorptionsstoffes muß dieser je nach eingesetztem Material auf Temperaturen zwischen 150 und 300°C erhitzt werden. Geschieht dies innerhalb des Sorptionsbehälters, muß der freigesetzte Wasserdampf gefahrlos abströmen können. Eine Kondensation des Wasserdampfes innerhalb des Eiserzeugers ist zu vermeiden.

Für den Fall, daß die gesamte Sorptionsstoffüllung erneuert wird, ist es von Vorteil, diese in einem durchlässigen Gehäuse zu verpacken und den Sorptionsstoff zusammen mit dem Gehäuse auszuwechseln. Das Gehäuse muß so gestaltet sein, daß der durch die Vakuumpumpe vom Vereisungsgefäß angesaugte Gas- bzw. Dampfstrom möglichst durch den gesamten Sorptionsstoff hindurch und nicht an diesen vorbei gelenkt wird. Zusätzlich ist darauf zu achten, daß innerhalb der Sorptionsstoffüllung keine Luftpolster verbleiben, welche den Wasserdampf am Erreichen der Sorptionsstoffüllung hindern.

Als Sorptionsstoff wurden mit sehr gutem Erfolg Zeolithe eingesetzt. Zeolithe sind Alumosilikate mit einer regelmäßigen Kristallstruktur, in deren Hohlräumen bis zu 36 Gew.-% Wasser reversibel adsorbiert werden können. Zeolithe haben auch bei relativ hohen Temperaturen (über 100°C) noch ein beträchtliches Wasserdampf-Adsorptionsvermögen und eignen sich deshalb besonders für den Einsatz in dem erfindungsgemäßen Eiserzeuger. Als besonders vorteilhaft hat sich der Zeolithtyp A, insbesonders in der Natrium- und Magnesiumform erwiesen. Dieser ist gegenüber einer häufigen Regeneration bei 250-300°C besonders stabil.

Um eine gleichmäßige Adsorption innerhalb der Sorptionsstoffüllung und einen geringen Druckabfall zu gewährleisten, haben sich besonders Sorptionsstoffgranulate bewährt. Granulatdurchmesser zwischen 1-10 mm zeigen dabei die besten Resultate.

Besonders vorteilhaft ist es, zwischen Sorptionsbehälter und Vereisungsgefäß eine Absperreinrichtung zu schalten, welche die Saugöffnung des Sorptionsbehälters verschließt. Auf diese Weise kann die Vakuumpumpe den Sorptionsbehälter vorevakuieren. Nach dem Untersetzen eines Vereisungsgefässes und Öffnen dieser Absperrvorrichtung ist dann das notwendige Vakuum schneller erreicht. Auch die Belastung der Vakuumpumpe ist dadurch geringer, da diese nicht von Atmosphärendruck an absaugen muß, sondern je nach Volumenverhältnissen nur ab etwa 100 mbar.

Vorteilhaft ist es auch, die Absperreinrichtung zu schließen, bevor über eine Belüftungseinrichtung das Vereisungsgefäß belüftet wird, um dieses von der planen Dichtfläche abnehmen zu können. Diese Belüftungseinrichtung ist dabei vorteilhafterweise zwischen Absperreinrichtung und Vereisungsgefäß angebracht, so daß beim Wechsel des Vereisungsgefässes nicht der Sorptionsbehälter mitbelüftet werden muß.

Besonders vorteilhaft ist es auch, den Betrieb der Vakuumpumpe mit der Absperreinrichtung schaltungstechnisch zu koppeln. In diesem Fall wird beim Öffnen der Absperreinrichtung automatisch die Vakuumpumpe in Betrieb genommen und beim Schließen ebenso automatisch wieder abgestellt. Der Sorptionsbehälter bleibt in diesem Fall unter Vakuum, während nur das Vereisungsgefäß und das Verbindungsstück zwischen Dichtfläche und Absperreinrichtung belüftet wird.

Bei Eiserzeugern ohne Absperreinrichtung wird zwangsläufig auch der Sorptionsbehälter beim Betätigen der Belüftungseinrichtung geflutet. Beim Ansetzen eines neuen Vereisungsgefäßes muß die Pumpe, falls sie nicht bereits in Betrieb ist, jedesmal separat gestartet werden. Um einen permanenten Betrieb der Pumpe zu umgehen, ist es von Vorteil einen Druckschalter vorzusehen, welcher die Pumpe bei Erreichen eines Absolutdruckes unterhalb 6 mbar abstellt und bei Überschreiten des Druckpegels wieder startet.

Für die Absperreinrichtungen haben sich mechanisch betätigbare Kugelhähne mit Nennweiten über 20 mm bewährt. Diese können mit Schaltern gekoppelt sein, welche bei völlig geschlossenen Kugelhähnen die Vakuumpumpen abschalten und beim Öffnen wieder einschalten. Gleichzeitig kann auch die Belüftungseinrichtung mit der Betätigung des Kugelhahnes gekoppelt werden. Auch hier ist bei geschlossenem Kugelhahn die Belüftungseinrichtung geöffnet und bei geöffnetem Kugelhahn geschlossen.

Innerhalb des Vereisungsgefäßes können, insbesondere am Boden, Strukturen eingesetzt werden, die eine Aufteilung der gefrorenen Masse nach dem Entfernen des Vereisungsgefäßes von der planen Dichtfläche gestatten. Auf diese Weise lassen sich beispielsweise auch "Eiswürfel" oder ähnliche Strukturen herstellen und später trennen.

In der Zeichnung sind zwei vorteilhafte Ausführungsbeispiele der Erfindung dargestellt. Es zeigen:
- Fig. 1: ein Blockschaltbild eines erfindungsgemäßen Eiserzeugers und
- Fig. 2: einen Sorptionsbehälter mit Sorptionsstoffüllung und ein angelegtes Vereisungsgefäß mit Eisinhalt.

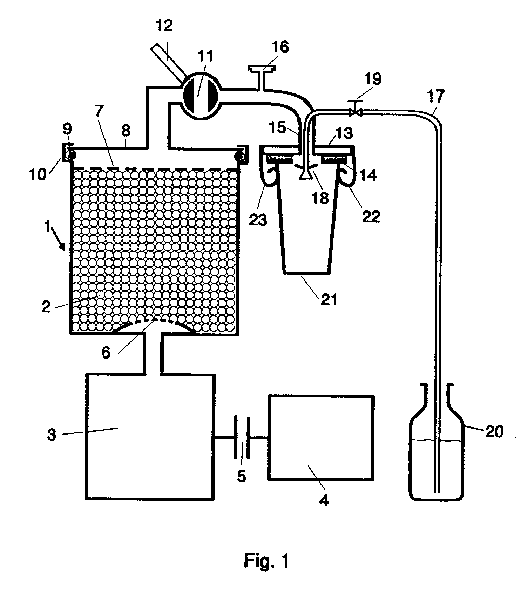

Der in Fig. 1 dargestellte Eiserzeuger enthält in einem Sorptionsbehälter 1 einen Sorptionsstoff 2 in Granulatform. Im unteren Bereich des Sorptionsbehälters 1 ist eine Vakuumpumpe 3, angetrieben über einen Elektromotor 4 und eine Kupplung 5, angeflanscht. Der Sorptionsstoff 2 ist durch Drahtnetze 6, 7 fixiert. Im oberen Teil des Sorptionsbehälters 1 befindet sich eine Verschlußvorrichtung 8, welche mittels eines Dichtringes 9 und Spannklammern 10 vakuumdicht auf den Sorptionsbehälter 1 aufgespannt ist. Über einen Kugelhahn 11, der über einen Handhebel 12 bedienbar ist, ist an den Sorptionsbehälter 1 eine plane Dichtfläche 13 angeschlossen. Diese ist mit einer glatten Dichtung 14 und einer Saugöffnung 15 versehen. Zwischen Kugelhahn 11 und planer Dichtfläche 13 ist in die Verbindungsleitung eine Belüftungseinrichtung 16 eingesetzt. Durch die Saugöffnung 15 ist eine Zuleitung 17 geführt, welche im Mündungsbereich trichterförmig erweitert ist. Unter der Saugöffnung 15 ist an der Zuleitung 17 ein Tropfenabscheider 18 angebracht. Außerhalb des Vakuumsystems ist in der Zuleitung 17 ein Absperrhahn 19 eingesetzt, über welchen die Zufuhr der zu erstarrenden Flüssigkeit gesteuert wird. Das zweite Ende der Zuleitung 17 ragt in ein Vorratsgefäß 20, welches die zu erstarrende Flüssigkeit bevorratet. Halteklammern 22, 23 haben die Aufgabe auch unterschiedlich geformte und mit unterschiedlichem Öffnungsquerschnitt versehene Vereisungsgefäße 21 am Ablösen von der Dichtfläche 13 nach dem Belüften zu hindern.

Zur Erzeugung von Wassereis in einem Trinkgefäß wird mit Hilfe des Eiserzeugers folgendermaßen verfahren:

Das Trinkgefäß wird mit seiner Öffnung auf die Dichtung 14 gepreßt und der Kugelhahn 11 geöffnet. Mit Betätigen des Kugelhahnes wird die Vakuumpumpe 3 über den Elektromotor 4 in Betrieb gesetzt. Da die Belüftungseinrichtung 16 und der Absperrhahn 19 automatisch geschlossen sind, sinkt der Druck im Trinkgefäß und im Sorptionsbehälter selbst unter 6,1 mbar ab. Nun kann der Absperrhahn 19 geöffnet werden, so daß das Wasser aus dem Vorratsbehälter 20 über die trichterförmige Erweiterung der Zuleitungsmündung in das Trinkgefäß eingesaugt wird und schlagartig zu Eis gefriert. Der abströmende Wasserdampf wird im Sorptionsstoff 2 adsorbiert. Sobald die gewünschte Eismenge erzeugt ist, wird der Absperrhahn 19 sowie der Kugelhahn 11 geschlossen. Gleichzeitig kann das Belüftungsventil 16 geöffnet werden um das Trinkgefäß zu fluten. Die Halteklammern 22 und 23 verhindern, daß das Trinkgefäß beim Belüften abfällt und möglicherweise beim Auftreffen auf die Unterlage zerbricht. Das Trinkgefäß 21 kann nunmehr zusammen mit der erzeugten Eismenge von den Halteklammern 22, 23 abgezogen werden. Der Sorptionsbehälter 1 bleibt unter Vakuum bis das nächste Vereisungsgefäß angesetzt und der Kugelhahn 11 geöffnet wird. Die Vakuumpumpe 3 muß somit nicht den gesamten Eiserzeuger von Atmosphärendruck abpumpen, sondern je nach Größe des Vereisungsgefäßes nur von etwa 100 bis 150 mbar. Die Abpumpzeit verringert sich dadurch auf wenige Sekunden.

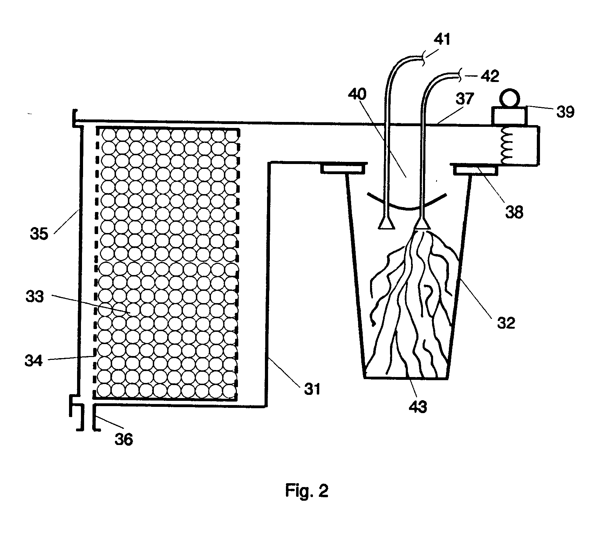

Der in Fig. 2 partiell dargestellte Eiserzeuger arbeitet ohne Absperreinrichtung zwischen Sorptionsbehälter 31 und Vereisungsgefäß 32. Im Sorptionsbehälter 31 befindet sich eine Zeolithfüllung 33 innerhalb eines gasdurchlässigen Gehäuses 34, welches zusammen mit der Zeolithfüllung 33 aus dem Sorptionsbehälter 31 über eine vakuumdichte Verschlußvorrichtung 35 ausgewechselt werden kann. Ein Anschlußstutzen 36 stellt die Verbindung zur nicht dargestellten Vakuumpumpe her. Der obere Teil des Sorptionsbehälters 31 verfügt über eine Verlängerung 37, welche als Strömungskanal zum Vereisungsgefäß ausgebildet ist. Zwischen Verlängerung 37 und Vereisungsgefäß 32 befindet sich eine plane Dichtfläche 38, um das Vereisungsgefäß vakuumdicht anflanschen zu können. Ein Belüftungsventil 39 erlaubt die Belüftung des Vereisungsgefässes 32 und des Sorptionsbehälters 31. Durch die Saugöffnung 40 sind zwei Zuleitungen 41, 42 geführt, die über jeweils eine eigene trichterförmige Mündung im oberen Teil des Vereisungsgefässes 32 verfügen. Innerhalb des Gefässes 32 hat sich beginnend von einer der Leitungsmündungen eine Eisstruktur 43 gebildet, die sich beim Entfernen des Gefäßes von der Dichtfläche 38 von der trichterförmigen Mündung abtrennen läßt.

## Patentansprüche

1. Eiserzeuger mit einem vakuumfesten Sorptionsbehälter (1), der einen festen Sorptionsstoff (2) enthält, und an den eine Vakuumpumpe (3) anschließbar ist, über welche der Sorptionsbehälter (1) evakuierbar ist, und wobei der Sorptionsbehälter (1) eine Saugöffnung (15) besitzt, über welche Luft und kalter Wasserdampf von einem abtrennbaren Vereisungsgefäß (21) einströmen kann,
gekennzeichnet durch eine plane, die Saugöffnung (15) umgebende Dichtfläche (13), über welche das Vereisungsgefäß (21) vakuumdicht an den Sorptionsbehälter (1) angesaugt werden kann und durch einen Tropfen- und Partikelabscheider (18), welcher Tropfen- und Eispartikel, die durch die Luft- und Wasserdampfströmung in den Sorptionsbehälter mitgerissen wurden, innerhalb des Vereisungsgefäßes abscheidet.

2. Eiserzeuger nach Anspruch 1,
gekennzeichnet durch
eine absperrbare Zuleitung (17, 19) für wäßrige Flüssigkeiten, die im Vereisungsgefäß (21) mündet.

3. Eiserzeuger nach Anspruch 1 oder 2,
dadurch gekennzeichnet,
daß der feste Sorptionsstoff (2) Zeolith enthält, insbesondere Zeolith vom Strukturtyp A.

4. Eiserzeuger nach einem der vorhergehenden Ansprüche,
gekennzeichnet durch
eine Belüftungseinrichtung (16), über welche das Vereisungsgefäß (21) belüftet werden kann, um es von der planen Dichtfläche (13) abnehmen zu können.

5. Eiserzeuger nach einem der vorhergehenden Ansprüche,
dadurch gekennzeichnet,
daß zwischen Saugöffnung (15) und planer Dichtfläche (13) eine Absperreinrichtung (11) zwischengeschaltet ist, welche das Einströmen von Luft und Wasserdampf in den Sorptionsbehälter (1) unterbindet.

6. Eiserzeuger nach einem der vorhergehenden Ansprüche,
dadurch gekennzeichnet,
daß das Vereisungsgefäß (21) ein Trinkglas ist.

7. Eiserzeuger nach einem der vorhergehenden Ansprüche,
dadurch gekennzeichnet,
daß der Sorptionsbehälter (1) über eine Kühlvorrichtung verfügt, über welche der Sorptionsstoff (2) gekühlt werden kann.

8. Eiserzeuger nach einem der vorhergehenden Ansprüche,
dadurch gekennzeichnet,
daß der Sorptionsbehälter (1) über eine Heizvorrichtung verfügt, über welche der Sorptionsstoff (2) durch Erhitzen regeneriert wird.

9. Eiserzeuger nach einem der vorhergehenden Ansprüche,
gekennzeichnet durch
eine vakuumdichte Verschlußvorrichtung (8), über welche der Sorptionsstoff (2) aus dem Sorptionsbehälter (1) ausgewechselt werden kann.

10. Verfahren zum Gefrieren wäßriger Flüssigkeiten, bei dem die wäßrige Flüssigkeit in einem Vereisungsgefäß gefroren wird, das mit einem Sorptionsbehälter verbunden wird, so daß ein im Sorptionsbehälter enthaltenes
Sorptionsmittel den aus dem Vereisungsgefäß abströmenden Wasserdampf adsorbiert,
dadurch gekennzeichnet, daß das zunächst leere Vereisungsgefäß mit seiner Öffnung an eine plane Dichtfläche des Sorptionsbehälters angelegt und ebenso wie der Sorptionsbehälter auf einen Druck unter 6,1 mbar evakuiert wird, worauf die zur Erstarrung bestimmte Flüssigkeit bei diesem Druck in das Vereisungsgefäß eingeleitet wird und bei und nach dem Eintritt durch Vakuumverdampfung erstarrt, und daß das Vereisungsgefäß danach belüftet und vom Sorptionsbehälter getrennt wird.

## Claims

1. An ice producing device comprising a vacuum-tight sorption container (1) which contains a solid sorbent (2) and to which a vacuum pump (3) can be connected, via which the sorption container (1) can be evacuated, and where the sorption container (1) possesses a suction opening (15) via which air and cold water vapour can flow in from a separable icing vessel (21), characterised by a flat sealing surface (13) which surrounds the suction opening (15) and via which the icing vessel (21) can be attached by suction to the sorption container (1) in vacuum-tight fashion and characterised by a drop- and particle separator (18) by which drop- and ice particles, which would be carried into the sorption container by the flow of air and water vapour, are separated inside the icing vessel.

2. An ice producing device as claimed in Claim 1, characterised by a supply pipeline (17, 19) for aqueous liquids which can be shut off and which leads into the icing vessel (21).

3. An ice producing device as claimed in Claim 1 or 2, characterised in that the solid sorbent (2) contains zeolite, in particular zeolite of the structural type A.

4. An ice producing device as claimed in one of the preceding claims, characterised by an aerating device (16) via which the icing vessel (21) can be aerated to enable it to be removed from the flat sealing surface (13).

5. An ice producing device as claimed in one of the preceding claims, characterised in that a shut-off device (11) is interposed between the suction opening (15) and the flat sealing surface (13), which shut-off device (11) suppresses the inflow of air and water vapour into the sorption container (1).

6. An ice producing device as claimed in one of the preceding claims, characterised in that the icing vessel (21) is a drinking glass.

7. An ice producing device as claimed in one of the preceding claims, characterised in that the sorption container (1) possesses a cooling device via which the sorbent (2) can be cooled.

8. An ice producing device as claimed in one of the preceding claims, characterised in that the sorption container (1) possesses a heating device via which the sorbent (2) is regenerated by heating.

9. An ice producing device as claimed in one of the preceding claims, characterised by a vacuum-tight closing device (8) via which the sorbent (2) in the sorption container (1) can be exchanged.

10. A process for freezing aqueous liquids, wherein the aqueous liquid is frozen in an icing vessel which is connected to a sorption container so that a sorbent contained in the sorption container adsorbs the water vapour outflowing from the icing vessel, characterised in that the initially empty icing vessel is applied with its opening to a flat sealing surface of the sorption container and, in the same way as the sorption container, is evacuated to a pressure of less than 6.1 mbar, whereupon the liquid which is to be frozen is introduced into the icing vessel at this pressure and during and following the introduction is frozen by vacuum evaporation, and that the icing vessel is then aerated and separated from the sorption container.

## Revendications

1. Dispositif de fabrication de glace comportant une cuve de sorption (1) à l'épreuve du vide, qui contient un sorbant (2) solide et qui peut être raccordée à une pompe (3) à vide, par laquelle la cuve de sorption (1) peut être mise sous vide, la cuve de sorption (1) comportant un orifice (15) d'aspiration, par lequel peuvent pénétrer de l'air et de la vapeur d'eau froide provenant d'un vase de congélation (21) amovible, caractérisé par une surface d'étanchéité (13) plane et entourant l'orifice d'aspiration (15), par laquelle le vase de congélation (21) peut être maintenu par aspiration d'une manière étanche au vide sur la cuve de sorption (1) et par un séparateur (18) de gouttelettes et de particules, qui sépare, dans le vase de congélation, les particules sous forme de gouttelettes et de glace, qui auraient été entraînées par le courant d'air et de vapeur d'eau dans la cuve de sorption.

2. Dispositif de fabrication de glace suivant la revendication 1,
caractérisé
par un conduit (17, 19) d'amenée de liquide aqueux, qui peut être fermé et qui débouche dans le vase (21) de congélation.

3. Dispositif de fabrication de glace suivant la revendication 1 ou 2,
caractérisé
en ce que le sorbant (2) solide contient un zéolite, notamment un zéolite de type de structure A.

4. Dispositif de fabrication de glace suivant l'une des revendications précédentes,
caractérisé par
un dispositif (16) de mise à l'air libre, par lequel le vase (21) de congélation peut être mis à l'air libre, afin de pouvoir l'enlever de la surface (13) plane d'étanchéité.

5. Dispositif de fabrication de glace suivant l'une des revendications précédentes,
caractérisé
en ce qu'entre l'orifice (15) d'aspiration et la surface (13) plane d'étanchéité est interposé un dispositif (11) d'arrêt, qui interdit toute entrée d'air et de vapeur d'eau dans la cuve (1) de sorption.

6. Dispositif de fabrication de glace suivant l'une des revendications précédentes,
caractérisé
en ce que le vase (21) de congélation est un verre à boire.

7. Dispositif de fabrication de glace suivant l'une des revendications précédentes,
caractérisé
en ce que la cuve (1) de sorption dispose d'un dispositif de refroidissement, par lequel le sorbant (2) peut être refroidi.

8. Dispositif de fabrication de glace suivant l'une des revendications précédentes,
caractérisé
en ce que la cuve (1) de sorption dispose d'un dispositif de chauffage, par lequel le sorbant (2) peut être régénéré par chauffage.

9. Dispositif de fabrication de glace suivant l'une des revendications précédentes,
caractérisé par
un dispositif (8) de fermeture étanche au vide, par lequel le sorbant (2) peut être remplacé.

10. Procédé de congélation de liquides aqueux, qui consiste à congeler le liquide aqueux dans un vase de congélation, qui communique avec une cuve de sorption de manière qu'un sorbant contenu dans la cuve de sorption adsorbe la vapeur d'eau sortant du vase de congélation, caractérisé en ce qu'il consiste à appliquer d'abord le vase de congélation vide par son ouverture à une surface plane d'étanchéité de la cuve de sorption et à le mettre, tout comme la cuve de sorption, sous vide sous une pression inférieure à 6,1 mbar, puis à envoyer sous cette pression le liquide destiné à être solidifié dans le vase de congélation et à le solidifier, après son entrée, par évaporation sous vide, puis à mettre le vase de congélation à l'atmosphère et à le séparer de la cuve de sorption.
